# EUROPEAN PATENT SPECIFICATION

(11) **EP 1 409 281 B1**
(45) Date of publication and mention of the grant of the patent: **30.12.2009**
(21) Application number: 02736391.0
(22) Date of filing: 05.06.2002
(51) Int. Cl.: B60J 1/02

(54) **WINDSCREEN PANEL**
PLATTE FÜR WINDSCHUTZSCHEIBE
PANNEAU DE PARE-BRISE

(30) Priority: 04.07.2001 SE 0102406
(43) Date of publication of application: 21.04.2004
(73) Proprietor: Scania CV AB (publ), 151 87 Södertälje (SE)
(72) Inventor: NEIGLICK, Bengt, S-126 37 Hägersten (SE)
(74) Representative: Sjögren Paulsson, Stina
(86) International application number: PCT/SE2002/001073
(87) International publication number: WO 2003/004293

(56) References cited:
- JP-A- 8 276 795

## Description

### TECHNICAL FIELD

The present invention relates to a windscreen panel for a heavy vehicle in accordance with the preamble to claim 1, such a windscreen panel is known from JP 08 276795.

### STATE OF THE ART

A known heavy vehicle on which the windscreen and front grille together form a substantially vertical front has a boundary region between the windscreen and said front grille. This region is covered by an elongate panel of sheetmetal through which the spindles of the windscreen wipers pass.

Other known heavy vehicles have in this boundary region separate, laterally distinct, cover strips made of synthetic material which thus only act sealingly in the outer regions of the lower portion of the windscreen.

The first-mentioned example of the state of the art represents an expensive solution involving a significant amount of work by assembly personnel, while the second example provides defective sealing in that it has been found that there is risk of dirt and snow being carried down behind the front grille by the windscreen wipers and fouling and in severe cases even obstructing the air supply apertures to the engine compartment.

### OBJECTS AND MOST IMPORTANT CHARACTERISTICS OF THE INVENTION

One object of the present invention is to improve on the state of the art and provide for heavy vehicles a windscreen panel which is economic to produce and easy to fit and provides good protection against ingress of dirt and snow behind the front grille.

This object is achieved in the case of a windscreen panel of the known kind mentioned in the introduction by means of the features in the characterising part of claim 1.

The result is good sealing and good assurance against material carried by the windscreen wipers making its way down under the front grille, so that undesirable fouling and obstruction of air supply apertures can be prevented. The possibility of economic production and quick and easy fitting is also created.

One aspect of the invention whereby the panel takes the form of three separate sections limits the extent to which thermal expansion of the material affects the change in the total length of the panel due to temperature fluctuation, which may otherwise cause significant problems if a single-piece windscreen panel is used.

In particular, it is advantageous that the middle section be provided with fastening lugs directed sideways and that each side section be provided with fastening recesses which cooperate with the same fastening elements as said fastening lugs. This solution results in economic and easy fitting of the whole windscreen panel and in advantageous characteristics as regards catering for temperature-dependent changes in length.

Designing the fastening recesses to allow sideways movement relative to the respective fastening elements is a rational way of absorbing changes in length of the side sections caused by length changes due to temperature.

Providing the windscreen panel with special indentations in the regions of climbing handholds incorporated in the front grille and situated at the upper edge of the front grille obviates the need to provide separate handholds and achieves a cost saving for the vehicle as a whole.

Producing the windscreen panel in the form of a shell structure makes it possible to save material and achieve rational manufacture. In particular, it is preferable that the panel when in use has a substantially inverted U-shaped cross-section, thereby affording advantages during both manufacture and fitting. The front portion will thus support the external surface of the panel, while the rear portion faces towards the cab and supports the fastening lugs and respective fastening apertures.

Providing the side sections with fastening means at their outer ends, which fastening means are covered by respective corner sections, achieves rational sealing connections accompanied by aesthetically pleasing appearance.

### BRIEF DESCRIPTION OF THE DRAWINGS

The invention will now be described in more detail on the basis of an embodiment and with reference to the attached drawings, in which:
Fig. 1 depicts schematically a cab for a heavy vehicle with a windscreen panel according to the invention,
Fig. 2 depicts an assembled windscreen panel according to the invention,
Fig. 3 depicts a windscreen panel according to the invention in a disassembled view,
Fig. 4 depicts a detail of a connecting portion between sections of a windscreen panel according to the invention,
Fig. 5 depicts a fastening element as per Fig. 4 but on a larger scale, and
Fig. 6 depicts in greater detail the construction of the panel on the basis of a partially cutaway view.

### DESCRIPTION OF AN EMBODIMENT

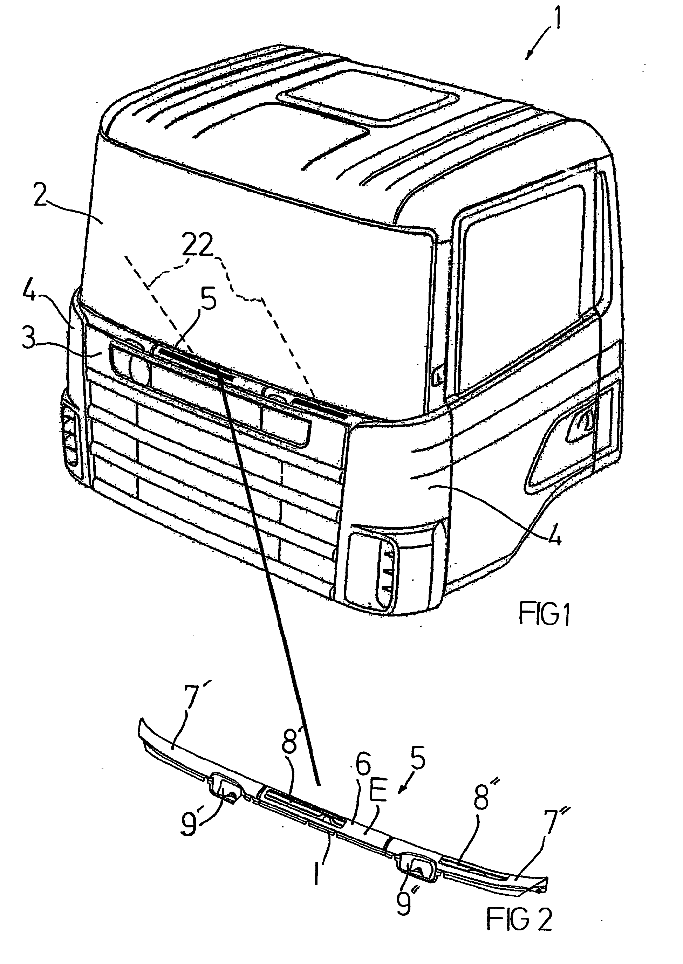

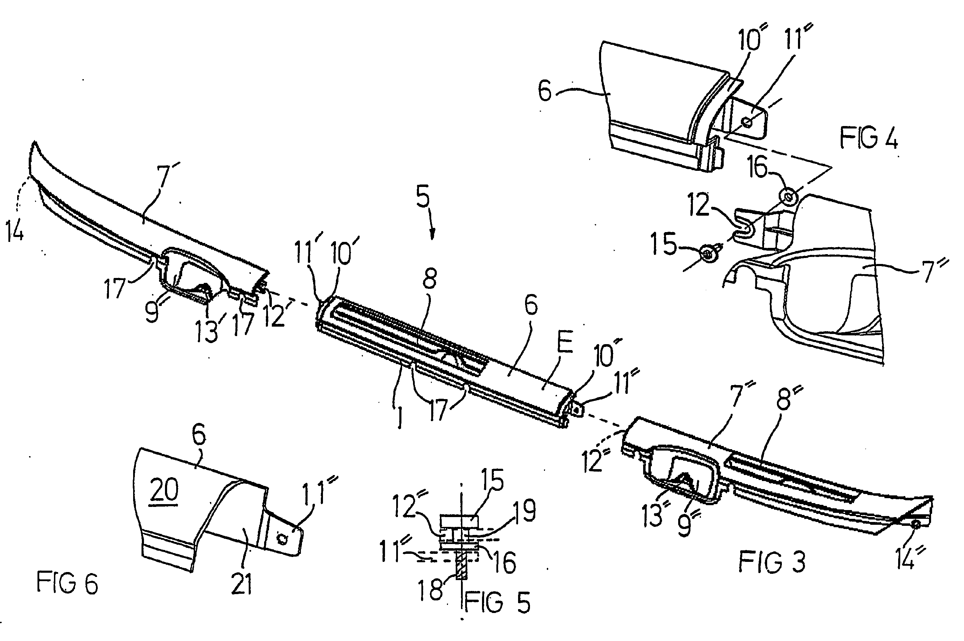

In Fig. 1, ref. 1 denotes a cab for a heavy vehicle. The cab has a substantially vertical front incorporating a windscreen denoted by ref. 2 and a front grille denoted by ref. 3. Ref. 4 denotes corner sections forming part of the cab exterior, and Fig. 5 denotes a windscreen panel which is fastened in the region between the windscreen 2 and the front grille 3. The ends of the windscreen panel 5 adjoin the respective corner sections 4. A pair of windscreen wipers 22, represented by broken lines, pass through recesses in the windscreen panel.

The front grille 3 is of a kind which is pivotable about a hinge in the region of its upper portion (not depicted), to which end, in order to prevent its striking the windscreen 2, it is situated slightly below the lower edge of the windscreen 2. For the same reason, the front grille 3 is also slightly displaced from the main plane of the windscreen. The resulting slit between the lower edge of the windscreen 2 and the upper edge of the front grille 3 is thus substantially sealed by the aforesaid windscreen panel 5. In particular, the upper edge of the panel seals substantially relative to the lower region of the windscreen.

Fig. 2 shows the windscreen panel comprising a middle section 6 and first and second side sections 7' and 7" respectively. The upper portion of the windscreen panel is provided with recesses 8' and 8" respectively for windscreen wipers. The windscreen panel 5 also has in its front region first and second handhold recesses 9' and 9" respectively to enable a person to insert his/her hands and grip the upper edge of the front grille in these recesses.

To this end, the upper portion of the front grille in line with the recesses is provided with built-in rounded portions which can serve as climbing handholds, e.g. for a driver to carry out work on the windscreen.

In Fig. 2, ref. E denotes the windscreen panel's external surface, which thus faces outwards. The lower edge of the windscreen panel 5 takes the form of a recessed portion I which is arranged to be situated behind the front grille's upper edge in the fitted position when the front grille is lowered.

The disassembled view in Fig. 3 shows additionally, in association with the elements depicted in Fig. 2, the middle section 6 incorporating, in the region for connection to the respective side sections, first and second recessed portions 10' and 10" respectively which in the fitted position are arranged to be concealed by the inner ends of the respective side sections. The middle section is provided with first and second fastening lugs 11' and 11" which are directed sideways and are provided with fastening holes for cooperation with fastening elements in a manner described further on. The side sections are provided with elements supporting first and second fastening recesses 12' and 12" respectively which are designed to cooperate with the same fastening elements as the corresponding fastening lugs.

Fig. 3 also shows further fastening means arranged on the windscreen panel, viz. fastening holes 13' and 13" at the bottom of the respective handhold recesses 9' and 9" respectively, and fastening holes 14' and 14" on the outer ends of the respective side sections. Also incorporated are a number of fastening slits. 17 distributed along the length of said recessed portion I of the windscreen panel to cooperate with corresponding fastening means arranged in the cab of the vehicle.

The detail diagram in Fig. 4 shows clearly how the windscreen panel 5 is intended to be fastened in the region of the joint between a middle section and a side section. A fastening element 15 with a fastening washer 16 fastens, by means of said fastening washer 16, the fastening lug 11" to a suitable mounting point, such as a portion of the cab for the vehicle.

The fastening recess 12" is thus depicted in the diagram in slit form, i.e. open sideways, so that it can be fitted sideways to the fastening element 15. This latter may take the form of the example depicted in the detail diagram in Fig. 5, which shows the fastening element 15 provided with a head (ref. 15) and a fastening portion 18.

In addition, the fastening element incorporates a spacing portion 19, the diameter of which exceeds the diameter of the hole through the fastening washer 16 so that fastening the fastening element 15 to a support involves clamping a fastening lug 11" by means of the fastening washer 16, while the element of the side section which surrounds the fastening recess 12" can be fitted sideways to the spacing portion 19. This means that the same fastening element can be used for fastening both of these parts, and the fastening recess is allowed sideways mobility relative to the spacing portion 19.

Fig. 6 shows that the panel, here illustrated by a partially cutaway view of the middle section 6, has when in use a substantially inverted U-shaped cross-section. It supports a front portion 20 (the external surface of the panel), while a rear portion 21 faces towards the cab and supports the fastening lug 11" and respective fastening recess and fastening hole (not depicted here). This construction of the panel results in a lightweight and strong structure with advantages as regards manufacture and fitting. The rear portion 21 may be of suitable substantially strip-shaped construction and is easy to dimension to cater for expected stresses.

The invention may be varied within the scopes of the claims, and in particular the exact configuration and cross-section of the windscreen panel may be adapted to the particular needs of a specific vehicle. The number of sections constituting the windscreen panel may be varied but it has been found that three is a suitable number with regard to longitudinal expansion and rational fitting. The recesses for windscreen wipers are adaptable as desired to the specific vehicle, including, for example, catering for the vehicle's steering wheel being on the right or the left.

Other ways of fastening the sections may arise. For example, the exact locations of the fastening lugs etc. may be varied. It is also possible for the windscreen panel to be provided with no recesses for climbing handholds.

The panel is made of synthetic material and one example of a suitable material of this kind is polypropene.

## Claims

1. A windscreen panel (5) for a heavy vehicle and for fastening below a windscreen (2) and above a front grille (3), which is incorporated in the front of the vehicle, wherein the windscreen panel is elongate in shape and divided into three separate parts so that it comprises a middle section (6) and two side sections (7', 7"), is designed to extend with a surface (E) facing outwards and extending substantially across the whole width of the windscreen (2), and has an upper edge which is designed to at least substantially constitute a seal relative to the region of the lower edge of the windscreen (2) **characterised**
- **in that** the windscreen panel (5) is made of a synthetic material, and
- **in that** the middle section (6) is provided with fastening lugs (11', 11") directed sideways for cooperation with fastening elements (15) fastenable to the vehicle cab.

2. A windscreen panel according to claim 1, **characterised in that** each side section (7', 7") is provided with fastening apertures (12', 12") for cooperation with said fastening elements (15).

3. A windscreen panel according to claim 2, **characterised in that** the fastening apertures are designed to allow sideways movement relative to respective fastening elements.

4. A windscreen panel according to any one of the foregoing claims, **characterised by** exhibiting at least one indentation (9', 9") constituting a recess to allow access to a climbing handhold incorporated in the front grille (3).

5. A windscreen panel according to any one of the foregoing claims, **characterised by** being of shell construction with closed or open cross-sectional profile.

6. A windscreen panel according to claim 5, **characterised by** having when in use a substantially inverted U-shaped cross-section.

7. A windscreen panel according to claim 6, **characterised by** comprising a front portion (20), which supports the external surface of the panel, and a rear portion (21), which faces towards the cab and supports the fastening lugs (11) and respective fastening recesses (12).

8. A windscreen panel according to any one of the foregoing claims, **characterised in that** the side sections (7', 7") have at their outer ends fastening means (14', 14") which are designed to connect to corner sections (4) forming part of the vehicle's exterior in such a way that in the fitted position they are concealed by these corner sections (4).

## Patentansprüche

1. Windschutzscheibenkonsole (5) für ein schweres Fahrzeug und zur Befestigung unterhalb einer Windschutzscheibe (2) und oberhalb einer Frontblende (3), die in der Fahrzeugfront integriert ist, wobei die Windschutzscheibenkonsole langgestreckt in der Gestalt ist und in drei separate Teile geteilt ist, sodass diese einen mittleren Abschnitt (6) und zwei seitliche Abschnitte (7', 7") aufweist, dazu vorgesehen ist, sich mit einer Fläche (E) zu erstrecken, die nach außen gerichtet ist und die sich im Wesentlichen über die gesamte Breite der Windschutzscheibe (2) erstreckt, und eine Oberkante aufweist, die dazu vorgesehen ist, zumindest im Wesentlichen eine Dichtung relativ zu dem Unterkantenbereich der Windschutzscheibe (2) zu bilden, **dadurch gekennzeichnet,**
- **dass** die Windschutzscheibenkonsole (5) aus Kunststoff hergestellt ist, und
- **dass** der mittlere Abschnitt (6) für das Zusammenwirken mit an der Fahrzeugkabine fixierbaren Befestigungselementen (15) mit zur Seite gerichteten Befestigungslaschen (11', 11") versehen ist.

2. Windschutzscheibenkonsole nach Anspruch 1,
**dadurch gekennzeichnet, dass** jeder seitliche Abschnitt (7', 7") für das Zusammenwirken mit den Befestigungselementen (15) mit Befestigungsöffnungen (12', 12") versehen ist.

3. Windschutzscheibenkonsole nach Anspruch 2,
**dadurch gekennzeichnet, dass** die Befestigungsöffnungen dazu vorgesehen sind, Seitwärts-Bewegungen relativ zu den entsprechenden Befestigungselementen zu ermöglichen.

4. Windschutzscheibenkonsole nach einem der vorangehenden Ansprüche,
**dadurch gekennzeichnet, dass** diese wenigstens eine Einbuchtung (9', 9") aufweist, die eine Ausnehmung bildet, um einen in der Frontblende (3) integrierten Steiggriff Zugriff zu ermöglichen.

5. Windschutzscheibenkonsole nach einem der vorangehenden Ansprüche,
**dadurch gekennzeichnet, dass** diese eine Schalenkonstruktion mit geschlossenem oder offenen Querschnittsprofil ist.

6. Windschutzscheibenkonsole nach Anspruch 5,
**dadurch gekennzeichnet, dass** diese im Gebrauch einen im Wesentlichen umgekehrt U-förmigen Querschnitt aufweist.

7. Windschutzscheibenkonsole nach Anspruch 6,
**dadurch gekennzeichnet, dass** diese einen vorderen Abschnitt (20), der die äußere Fläche der Konsole stützt, und einen hinteren Abschnitt (21) aufweist, der der Kabine zugewandt ist und die Befestigungslaschen (11) und entsprechend die Befestigungsausnehmungen (12) stützt.

8. Windschutzscheibenkonsole nach einem der vorangehenden Ansprüche,
**dadurch gekennzeichnet, dass** die seitlichen Abschnitte (7', 7") an ihren äußeren Enden Befestigungsmittel (14', 14") aufweisen, die zum Verbinden mit Eckabschnitten (4) vorgesehen sind, die derart einen Teil der Fahrzeugaußenseite bilden, dass sie im montierten Zustand durch diese Eckabschnitte (4) verdeckt sind.

## Revendications

1. Panneau de pare-brise (5) pour un véhicule lourd et pour fixation au-dessous d'un pare-brise (2) et au-dessus d'une grille frontale (3) qui est incorporée dans la partie avant du véhicule, le panneau de pare-brise étant de forme allongée et divisé en trois parties séparées de sorte qu'il comprend une section médiane (6) et deux sections latérales (7', 7"), est conçu pour s'étendre en ayant une surface (E) tournée vers l'extérieur et s'étendant sensiblement sur toute la largeur du pare-brise (2), et présente un bord supérieur destiné à au moins sensiblement constituer un joint d'étanchéité par rapport à la région du bord inférieur du pare-brise (2),
**caractérisé en ce que :**
- le panneau de pare-brise (5) est réalisé dans un matériau synthétique, et
- la section médiane (6) est pourvue de pattes de fixation (11', 11") orientées latéralement pour coopération avec des éléments de fixation (15) pouvant être fixés à la cabine du véhicule.

2. Panneau de pare-brise selon la revendication 1, **caractérisé en ce que** chaque section latérale (7', 7") est pourvue d'ouvertures de fixation (12', 12") pour coopération avec lesdits éléments de fixation (15).

3. Panneau de pare-brise selon la revendication 2, **caractérisé en ce que** les ouvertures de fixation sont conçues pour permettre un mouvement latéral par rapport aux éléments de fixation respectifs.

4. Panneau de pare-brise selon l'une quelconque des revendications précédentes, **caractérisé en ce qu'**il montre une indentation (9', 9") constituant un évidement devant permettre l'accès à une poignée pour grimper, incorporée dans la grille frontale (3).

5. Panneau de pare-brise selon l'une quelconque des revendications précédentes, **caractérisé en ce qu'**il présente une structure en coque dotée d'un profil de section transversale fermé ou ouvert.

6. Panneau de pare-brise selon la revendication 5, **caractérisé en ce qu'**il présente, en cours d'utilisation, une section transversale sensiblement en U inversé.

7. Panneau de pare-brise selon la revendication 6, **caractérisé en ce qu'**il comprend une partie frontale (20) qui supporte la surface extérieure du panneau, et une partie arrière (21) tournée vers la cabine et supportant les pattes de fixation (11) et évidements de fixation (12) respectifs.

8. Panneau de pare-brise selon l'une quelconque des revendications précédentes, **caractérisé en ce que** les sections latérales (7', 7") présentent, à leurs extrémités extérieures, des moyens de fixation (14', 14") qui sont conçus pour se raccorder à des sections d'angle (4) formant une partie de l'extérieur du véhicule, de façon à être masqués, dans la position montée, par lesdites sections d'angle (4).
